# EUROPÄISCHE PATENTANMELDUNG

(11) **EP 2 775 220 A2**
(43) Veröffentlichungstag der Anmeldung: **10.09.2014**
(21) Anmeldenummer: 14000523.2
(22) Anmeldetag: 13.02.2014
(51) Int. Cl.: F24D 17/00, G01F 1/66

(54) **Vorrichtung zum Erwärmen von Trinkwasser, umfassend eine mit einem Wärmemedium beschickten Wärmetauscher**

(30) Priorität: 08.03.2013 DE 102013003934
(71) Anmelder: PAW GmbH & Co. KG, 31789 Hameln (DE)
(72) Erfinder: Pommerening, Marc, 31789 Hameln (DE); Böhning, Holger, 31860 Emmerthal (DE)
(74) Vertreter: Jabbusch, Matthias

(57) **Zusammenfassung**

Bei einer Vorrichtung zum Erwärmen von Trinkwasser, umfassend zumindest einen mit einem Wärmemedium beschickten Wärmetauscher, der wenigstens einen Rücklaufanschluss und wenigstens einen Vorlaufanschluss für das Wärmemedium hat sowie zumindest einen Kaltwassereintritt und zumindest einen Warmwasseraustritt für das Trinkwasser aufweist, ist vorgesehen, dass in dem Kaltwassereintritt und/oder in dem Warmwasseraustritt für das Trinkwasser zumindest ein Ultraschallsensor für das Trinkwasser angeordnet ist.

Mit der vorbezeichneten Vorrichtung wird in komfortabler Weise Trinkwasser bereitgestellt.

## Beschreibung

Die Erfindung betrifft eine Vorrichtung zum Erwärmen von Trinkwasser, umfassend zumindest einen mit einem Wärmemedium beschickten Wärmetauscher, der wenigstens einen Rücklaufanschluss und wenigstens einen Vorlaufanschluss für das Wärmemedium hat sowie zumindest einen Kaltwassereintritt und zumindest einen Warmwasseraustritt für das Trinkwasser aufweist.

Trinkwasser wird in Haushalten für Küche und Bad verwendet. Es unterliegt hohen Hygieneanforderungen, daher kommt es mit einem Wärmemedium nicht in direkten Kontakt. Der Kontakt mit dem Wärmemedium wird üblicherweise in einem Wärmetauscher realisiert. In den Wärmetauscher wird ein Wärmemedium geführt, das Trinkwasser läuft in kühlerem Zustand über einen Kaltwassereintritt in den Wärmetauscher ein und verlässt den Wärmetauscher über einen Warmwasseraustritt im angewärmten Zustand.

Bei der Benutzung von Trinkwasser ist es ein Komfortgewinn, wenn auch bei Entnehmen einer nur geringen Menge an Trinkwasser dieses sogleich in der gewünschten Temperatur vorliegt. Darüber hinaus soll das fließende Trinkwasser nicht wechselnde Temperaturen haben, sondern mit gleichmäßiger Temperatur austreten.

Der Erfindung liegt die Aufgabe zugrunde, eine Vorrichtung der eingangs genannten Gattung aufzuzeigen, mit der in komfortabler Weise Trinkwasser bereitgestellt wird.

Diese Aufgabe ist erfindungsgemäß dadurch gelöst, dass in dem Kaltwassereintritt und/oder in dem Warmwasseraustritt für das Trinkwasser zumindest ein Ultraschallsensor für das Trinkwasser angeordnet ist.

Der erfindungsgemäß vorgesehene Ultraschallsensor ist im Eintritt oder Austritt einer Leitung zugeordnet, er misst also in das Innere der Leitung hinein. Unter Einsatz des Dopplereffektes kann durch den Ultraschallsensor sehr schnell gemessen werden, ob ein Medium fließt, auch wenn nur ein geringer Fluss auftritt. Mit dem Ultraschallsensor ist somit beschleunigt feststellbar, dass das Trinkwasser fließt. Diese Erkenntnis kann dann sofort in eine Zufuhr von Wärmemedium in den Wärmetauscher umgesetzt werden, um eine Temperatur herzustellen beziehungsweise beizubehalten.

Ein Ultraschallsensor zeichnet sich durch einen großen Messbereich und damit durch eine große Dynamik aus. Er kann beispielsweise Durchflussmengen von 0,5 bis 130 Liter pro Minute feststellen, seine Messgeschwindigkeit beträgt beispielsweise 1 Millisekunde.

Nach einer ersten Weiterbildung der Erfindung ist vorgesehen, dass der Ultraschallsensor mit einer separaten Energieversorgung ausgerüstet ist. Diese separate Energieversorgung ist beispielsweise eine Batterie, welche eine lange Lebenszeit hat. Der Ultraschallsensor ist damit nicht an eine externe Energieversorgung anzuschließen.

Konstruktiv kann vorgesehen sein, dass der Ultraschallsensor in eine Armatur einer Trinkwasserleitung eingesetzt ist. In der Armatur, die beispielsweise aus Messing gefertigt ist, ist der Ultraschallsensor schlagsicher aufgenommen, so dass er gegen äußere Einflüsse geschützt ist.

Der Ultraschallsensor kann dabei einen über die Armatur vorstehenden Abschnitt haben, in den beispielsweise die Batterie für die Stromversorgung oder auch Steuerungselemente angeordnet sind. Der vorstehende Abschnitt kann beispielsweise ein Kunststoffgehäuse haben, so dass auch dieser Abschnitt gegen Spritzwasser geschützt ist.

Weiterhin kann vorgesehen sein, dass der Ultraschallsensor ein Traggerüst hat, das einen Fließweg für das Trinkwasser bereitstellt. Das Traggerüst wird in die Armatur eingesetzt, es trägt vorzugsweise die elektronischen Bauteile des Ultraschallsensors.

Das Traggerüst kann gegen Trinkwasser geschützte Kanäle für elektrische Leitungen des Ultraschallsensors haben, diese nehmen beispielsweise Kabel auf. Ein Ultraschallsensor hat stets einen Sender und einen Empfänger, diese Bauteile sind mit elektrischer Energie zu versorgen. Weiter kann noch vorgesehen sein, dass das Traggerüst ineinander steckbare Gerüstabschnitte umfasst. Die Gerüstabschnitte des Traggerüstes nehmen die elektronischen Bauteile auf, sie können auch die Kanäle bereitstellen. Die Gerüstabschnitte können aus einzelnen Bauelementen bestehen, die separat und mit hoher Genauigkeit gefertigt werden, anschließend werden sie ineinandergesteckt und in einer Armatur angeordnet. Die Gerüstabschnitte können beispielsweise als Halbschalen ausgebildet sein, welche für eine Versteifung des Traggerüstes insgesamt sorgen.

Zur weiteren Ausbildung kann noch vorgesehen sein, dass der Ultraschallsensor mit einer Pumpe im Trinkwasserkreislauf verschaltet ist. Bei dieser Pumpe kann es sich um eine Zirkulationspumpe für das Trinkwasser im Trinkwasserkreislauf handeln, welche für eine gleichmäßige Temperaturverteilung in der Warmwasserleitung sorgt. Ist diese Pumpe in Betrieb, so wird ein Signal an den Ultraschallsensor gegeben, dass die aufgrund des Pumpenbetriebes auftretende Bewegung des Wassers in der Warmwasserleitung keine Entnahme bedeutet und somit kein Anwendungsfall für zusätzliches Beschicken des Wärmetauschers mit Wärmemedium ist.

Die Pumpe kann dabei mit einer Regelung verknüpft sein, wobei die Regelung mit einem Temperatursensor im Trinkwasserkreislauf verschaltet ist. In diesem Fall ist trotz Betrieb der Zirkulationspumpe ein Wärmeeintrag in den Trinkwasserzulauf möglich, nämlich zum Beispiel dann, wenn längere Zeit kein Trinkwasser aus dem Zulauf entnommen wurde und dieses langsam abkühlt.

Ein Ausführungsbeispiel der Erfindung, aus dem sich weitere erfinderische Merkmale ergeben, ist in der Zeichnung dargestellt. Es zeigen:
- Fig. 1:: eine perspektivische Ansicht der erfindungsgemäßen Vorrichtung zum Erwärmen von Frischwasser,
- Fig. 2:: eine gesprengte Ansicht eines der Trinkwasserleitung zugeordneten Bauteils, und

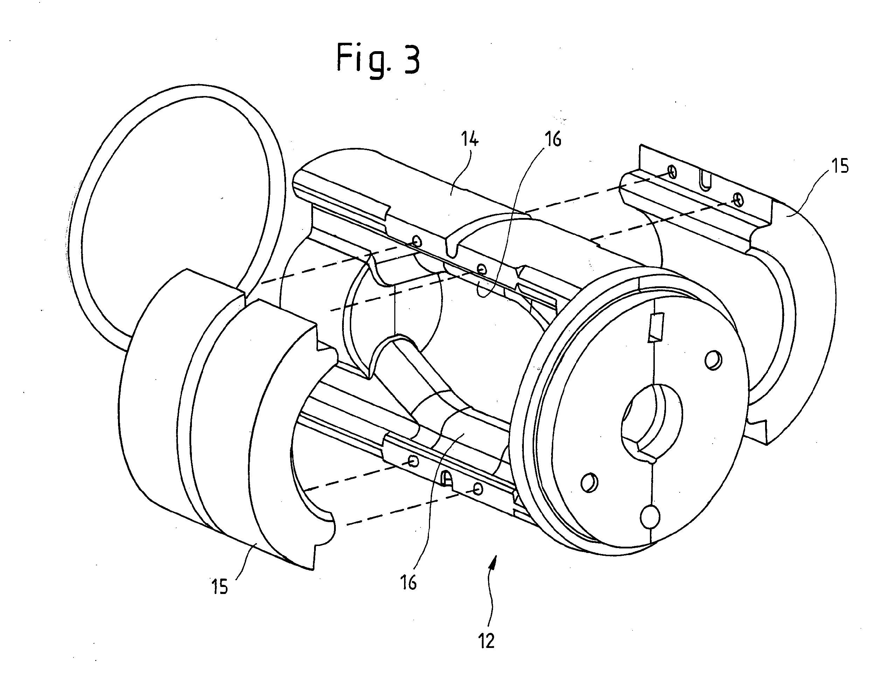

- Fig. 3:: eine perspektivische Ansicht von Einzelteilen des Bauteils gemäß Fig. 2.

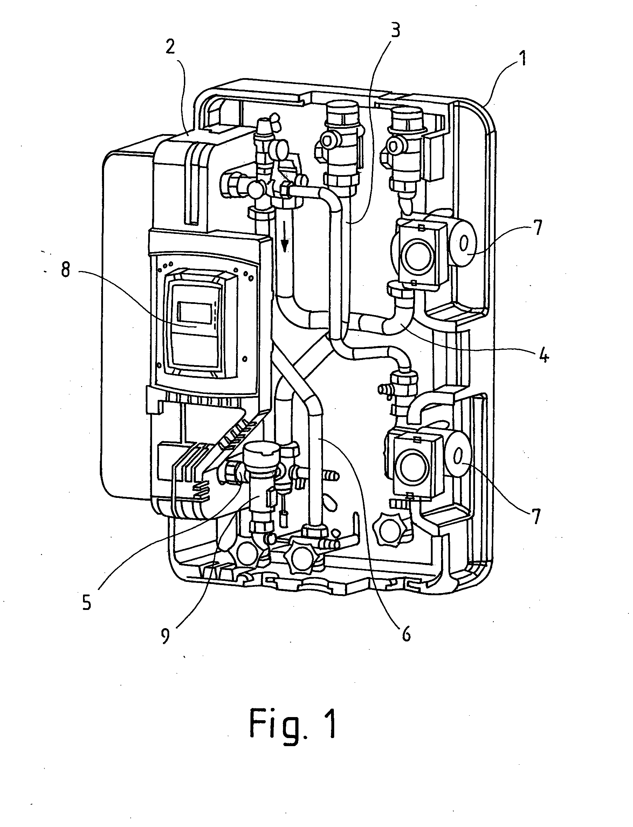

Die Vorrichtung in Fig. 1 hat ein Gehäuse 1, das einen Wärmetauscher 2 trägt. Der Wärmetauscher 2 wird von unten durch eine Warmleitung 3 mit einem Wärmemedium beaufschlagt, der Rücklauf des Wärmemediums erfolgt über eine Kaltleitung 4. Die Wärme aus der Warmleitung 3 wird im Wärmetauscher 2 auf eine für Trinkwasser übertragen, eine Zirkulationsleitung für Trinkwarmwasser ist mit 6 gekennzeichnet.

Die Vorrichtung in Fig. 1 trägt Pumpen 7 sowie eine Regelung 8 mit Anzeige. Erfindungsgemäß ist in der Vorrichtung ein Ultraschallsensor 9 vorgesehen, dieser ist dem Warmwasseraustritt zugeordnet.

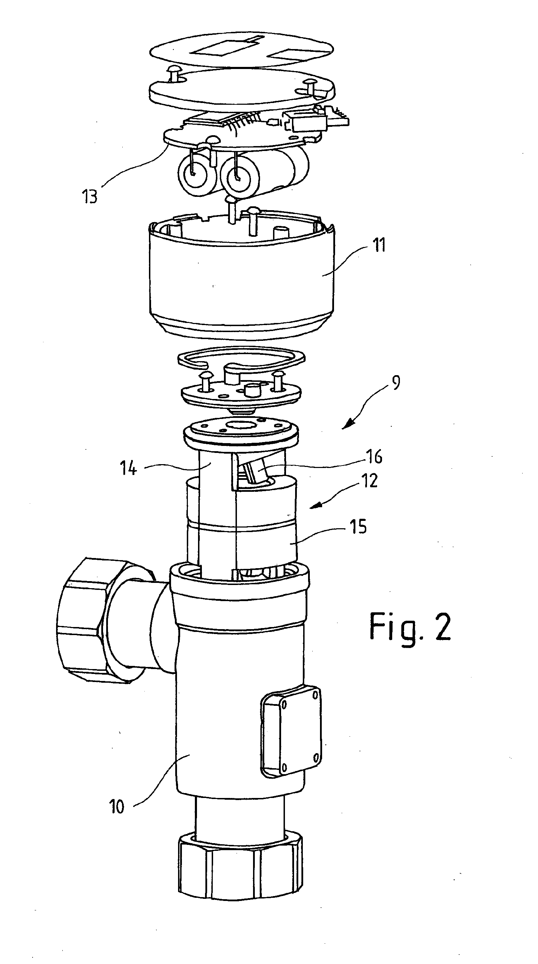

Fig. 2 zeigt, dass der Ultraschallsensor 9 in einer Armatur 10 für den Trinkwasserzulauf anordbar ist, der Ultraschallsensor 9 hat dabei Bauteile, die in der Armatur 10 angeordnet werden und Bauteile, die in einem über die Armatur 10 vorstehenden Abschnitt 11 angeordnet werden.

Die in der Armatur 10 anordbaren Bauteile des Ultraschallsensors 9 umfassen ein Traggerüst 12. Der Abschnitt 11 außerhalb der Armatur 10 ist dagegen als Gehäuse ausgebildet, er nimmt, eine Platine 13 mit elektronischen Bauelementen auf.

Fig. 2 zeigt die Bauteile des Traggerüstes 12 in maßstäblich vergrößerter Ansicht. Das Traggerüst 12 weist ein zylinderförmiges Grundgerüst 14 auf, an das ineinander steckbare Gerüstabschnitte 15 heranführbar sind. Im Inneren des Traggerüstes 12 verlaufen Kanäle 16 für elektrische Leitungen des Ultraschallsensors 9.

## Patentansprüche

1. Vorrichtung zum Erwärmen von Trinkwasser, umfassend zumindest einen mit einem Wärmemedium beschickten Wärmetauscher, der wenigstens einen Rücklaufanschluss und wenigstens einen Vorlaufanschluss für das Wärmemedium hat sowie zumindest einen Kaltwassereintritt und zumindest einen Warmwasseraustritt für das Trinkwasser aufweist,
**dadurch gekennzeichnet,**
**dass** in dem Kaltwassereintritt und/oder in dem Warmwasseraustritt für das Trinkwasser zumindest ein Ultraschallsensor (9) für das Trinkwasser angeordnet ist.

2. Vorrichtung nach Anspruch 1, **dadurch gekennzeichnet, dass** der Ultraschallsensor (9) mit einer separaten Energieversorgung ausgerüstet ist.

3. Vorrichtung nach Anspruch 1 oder 2, **dadurch gekennzeichnet, dass** der Ultraschallsensor (9) in eine Armatur (10) einer Trinkwasserleitung (5) eingesetzt ist.

4. Vorrichtung nach Anspruch 3, **dadurch gekennzeichnet, dass** der Ultraschallsensor (9) zumindest einen über die Armatur (10) vorstehenden Abschnitt (11) hat.

5. Vorrichtung nach Anspruch 3 oder 4, **dadurch gekennzeichnet, dass** der Ultraschallsensor (9) ein Traggerüst (12) hat, das einen Fließweg für das Trinkwasser bereitstellt.

6. Vorrichtung nach Anspruch 5, **dadurch gekennzeichnet, dass** die elektronischen Bauteile des Ultraschallsensors (9) in dem Traggerüst (12) gehalten sind.

7. Vorrichtung nach Anspruch 6, **dadurch gekennzeichnet, dass** das Traggerüst (12) gegen Trinkwasser geschützte Kanäle (16) für elektrische Leitungen des Ultraschallsensors (9) umfasst.

8. Vorrichtung nach einem der Ansprüche 5 bis 7, **dadurch gekennzeichnet, dass** das Traggerüst (12) ineinander steckbare Gerüstabschnitte (15) umfasst.

9. Vorrichtung nach einem der vorhergehenden Ansprüche, **dadurch gekennzeichnet, dass** der Ultraschallsensor (9) mit einer Pumpe (7) im Zirkulationskreislauf des Trinkwassers verschaltet ist.

10. Vorrichtung nach Anspruch 9, **dadurch gekennzeichnet, dass** die Pumpe (7) mit einer Regelung (8) verknüpft ist, wobei die Regelung (8) mit einem Temperatursensor im Trinkwasserkreislauf verschaltet ist.
